# EUROPEAN PATENT APPLICATION

(11) **EP 1 331 831 A1**
(43) Date of publication of application: **30.07.2003**
(21) Application number: 03001642.2
(22) Date of filing: 24.01.2003
(51) Int. Cl.: H04Q 7/22

(54) **Apparatus to supply and exchange information between a user and a delivery unit**

(30) Priority: 28.01.2002 IT UD20020016
(71) Applicant: SENTIERI VIVI Srl, 38100 Trento (IT)
(72) Inventor: Collini, Albino, 38100 Trento (IT)
(74) Representative: Petraz, Gilberto Luigi

(57) **Abstract**

Apparatus (10) to supply and exchange information between a user and at least an information delivery unit (24), wherein first transceiver means (11) are provided able to be associated with each user to allow to send a request for information. The first transceiver means (11) are associated with means (18) to localize and identify a defined geographical position of the user. The apparatus (10) also comprises a plurality of information delivery units (24) each associated with a defined geographical area (27). Each delivery unit (24) can be selectively activated upon reception of a request for information from a user, whose position has been associated with the specific geographical area (27) wherein the delivery unit (24) is located.

## Description

### FIELD OF THE INVENTION

The invention concerns an apparatus to supply and exchange information between a user equipped with an appropriate portable unit for transmitting and receiving information, and at least a unit for delivering such information.

The apparatus according to the invention allows a user, equipped with a portable transceiver unit associated with at least means to localize and identify a defined geographical position, to send a request for information to the delivery unit nearest the point where the user is, and to receive the desired information in written, graphical, visual and/or audio form.

The unit for delivering the service can be an operative unit in itself, equipped with a suitable independent database and units to search, select and process data, or it can be a terminal of a network of terminals managed by a central operative unit connected with a center to supply information selected by the user.

### BACKGROUND OF THE INVENTION

The state of the art includes systems to request information by a user, for example tourist, nature, geological, historical information or similar, which use fixed means such as telephone and/or video devices. Such devices are equipped with cassettes or other pre-recorded supports with information concerning the illustration of a landscape, works of art, historical or nature information of a particular place, and so on.

These conventional systems have a first disadvantage in that, in order to use the service, the user has to identify the position of the devices, reach them physically and then activate them. Another disadvantage is that the information is of a passive type and cannot be personalized according to the specific requirements of each user. A further disadvantage is that the information is normally limited and follows a fixed and unalterable pattern so that, in order to access a specific part, the user is often obliged to listen and/or see information concerning subjects in which he is not interested.

The present Applicant has devised and embodied this invention to overcome the shortcomings of the state of the art and to obtain further advantages.

### SUMMARY OF THE INVENTION

The invention is set forth and characterized essentially in the main claim, while the dependent claims describe other innovative characteristics of the invention.

One purpose of the invention is to achieve an apparatus which can allow a plurality of users to access a telecommunications network, remotely, from any position and in a simple and rapid manner, in order to forward a request for specific and personalized information. Another purpose is to allow a user to select, request and receive information which can be personalized and modified actively, using forwarding commands concerning specific requests.

A further purpose is to allow a user to use visual selection means, such as a digital TV or video-camera, to automatically identify the topic or object about which the request for desired information is sent to the nearest delivery unit.

Yet another purpose is to achieve a completely flexible apparatus not limited to pre-selected data and information concerning only a restricted number of places or itineraries.

In accordance with the above purposes, an apparatus according to the invention comprises a plurality of first portable transceiver means which can be associated with each user, which allow him, in a first step, to forward the request for the desired information and, in a second step, to receive the requested information in written, graphical, video and/or audio form.

The apparatus according to the invention also comprises a plurality of information delivery units, each one associated with and covering a defined geographical area, able to be selectively activated when a user makes a request for information and after the position of the user has been univocally associated, by geographically localizing and orienting the user, with one and one only of said delivery units.

According to one characteristic of the invention, the first transceiver means comprise at least a portable-type telecommunications device, for example the e-book type, or even smaller, the palmtop type, associated with at least an antenna to transmit/receive information via radio by means of a telephone network.

The first transceiver means also include, or can be associated with, means for the geographical identification and localization and/or goniometric orientation of the user who has activated the information request service.

In a first embodiment, the geographical identification means consist of at least a GPS (Global Positioning System) device. According to the invention, the GPS device is associated with at least an orientation means able to indicate a reference direction, such as a compass or similar.

According to another characteristic of the invention, the first portable transceiver means are associated with, or comprise, visual recording means of a digital type, for example a digital video-camera of the type known as a web-cam, or other device having a similar function.

By means of such recording means, associated with suitable means to process the image, for example, a microprocessor, the user can focus on an object or a zone concerning which he wishes to receive specific information, for example concerning the landscape, geology, nature, culture or similar, and send the relative request to the delivery unit associated with the zone identified by the user's presence.

According to a variant, the information available is structured on several levels, for example in terms of progressively greater or lesser detail.

According to the invention, the transceiver means comprise first interface means, such as a display or similar, associated with sound emission means, in order to display and/or listen to the information requested, and second interface means, for example a keyboard, a display of the touch-screen type, a cursor, a mouse or similar, in order to input and select data. The sound emission means, according to a variant, comprise headphones which can be selectively activated.

The second interface means, in particular, allow the user to scroll down pre-defined lists and menus, corresponding to options to choose the information which can be received by means of said delivery units.

By means of said second interface means, according to a variant of the invention, the user can also introduce personal data, such as his weight, height, age, general physical state and suchlike, and transmit them to the information delivery unit which corresponds to his position.

After having processed the data received, the information delivery unit is suitable to send in reply personalized information relating, for example, to movement and/or gymnastic-athletic activities specific for the user, which provide to use routes and/or equipment accessible in the relative geographical zone, and/or relating to personalized diets or other desired information, for example concerning fitness.

According to the invention, when a user is in a particular zone and activates his transceiver means, his position is localized and the user automatically matched with an information delivery unit. The user, possibly after having received an enabling signal, selects the request for the desired information, for example relating to the flora and/or fauna of the place, geographical, geological, historical, social descriptions or otherwise.

The information delivery unit, having been activated by this request, searches inside its database for the packet of information requested, selects it and sends it in reply to the user's transceiver means. According to the selection made, the information can be only visual, only audio or a combination of these.

The information delivery units can be arranged, in a first embodiment, in particular positions in fixed areas; according to a variant they are located on movable transport means to receive the request issued by the user and to generate a corresponding information signal.

The activation of the transceiver means by the user, according to a variant, can generate a signal containing also an identification code which allows to identify the user himself, for example to debit a cost of the service.

With the apparatus according to the invention, it is possible to make a widespread diffusion of information which can be selected and personalized, whereby it is possible to supply a detailed service, extremely flexible and precise to users, for example tourists, researchers, simple visitors, athletes or otherwise.

According to another variant, every transceiver means is equipped with at least a function whereby, in the event of accidents, the user can send an emergency signal to a surveillance organization and/or emergency service associated with the specific geographical zone where the user is at that moment.

Yet another variant of the invention provides to offer the user the possibility, at the end of the trip, to obtain a summary, graphical and/or schematic, in paper form, visual or audio, of the route he has followed, the time taken, the difference in altitude covered, and if required, a detailed diary, according to the depth desired, of the scientific and cognitive aspects of the places passed through and/or visited.

### BRIEF DESCRIPTION OF THE DRAWINGS

These and other characteristics of the invention will be apparent from the following description of a preferential form of embodiment of the invention, given as a non-restrictive example with reference to the attached drawings wherein:
- fig. 1is a schematized view of an apparatus according to the invention;
- fig. 2is a block diagram of a transceiver device of the apparatus shown in fig. 1;
- fig. 3is a prospective view of a transceiver device of the apparatus shown in fig. 1;
- fig. 4is a block diagram of an information delivery unit of the apparatus shown in fig. 1.

### DETAILED DESCRIPTION OF A PREFERENTIAL FORM OF EMBODIMENT OF THE INVENTION

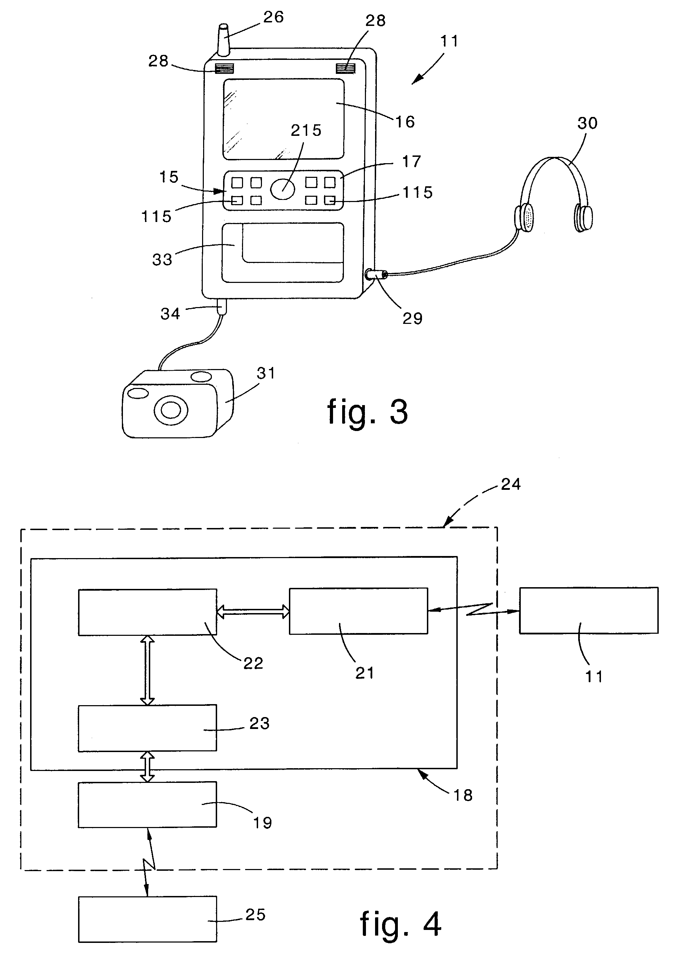

With reference to the attached drawings, the apparatus 10 according to the invention comprises a plurality of transceiver devices 11, each of which is able to be owned by a user to allow him to send a request for information to a correlated remote delivery unit 24. Each of the transceiver devices 11 consists of a telecommunications device substantially small enough to be carried in the pocket, for example a telephone-palmtop computer (fig. 3), equipped with an antenna 26 to exchange information via radio with a specific delivery unit 24.

The transceiver device 11 is associated with a localization device 18 able to geographically identify (in terms of position and orientation) and to communicate the position of the user in order to selectively activate the delivery unit 24 located in the geographical zone 27 nearest the position of the user and univocally associated with said geographical zone 27. The device 18 can be, for example, a GPS device equipped with its own antenna 32; in a preferential embodiment, the GPS device 18 is associated with orientation and direction indication means, for example a compass.

By means of the GPS device 18 the user can communicate with the delivery unit 24 nearest to him in order to display, on his telecommunications device 11, a map of the place where he is, possibly on different scales, or other information of a geographical type.

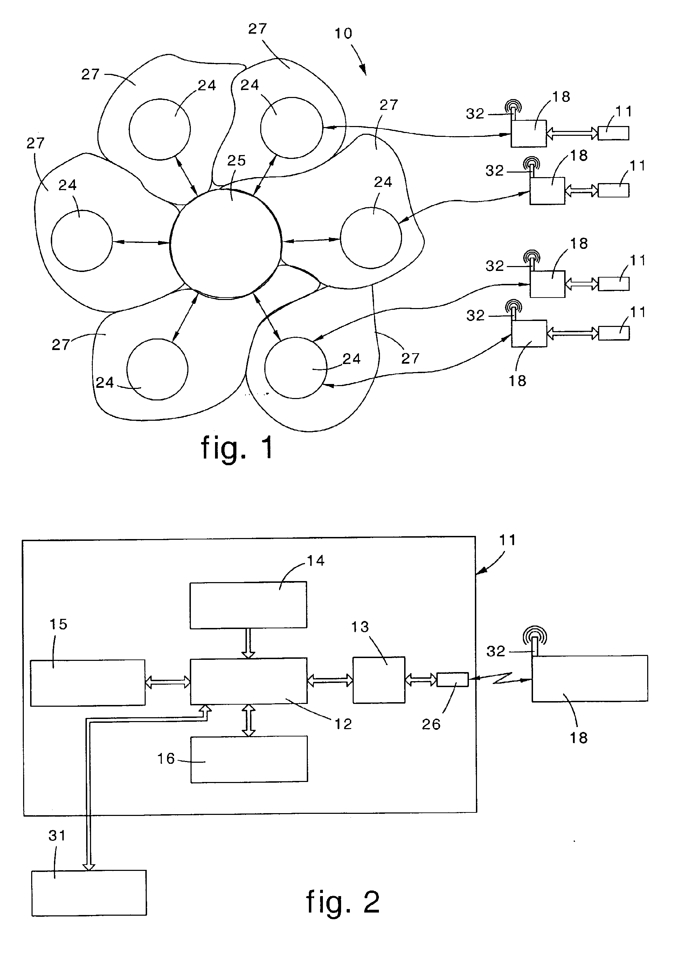

The transceiver device 11 can advantageously use a conventional technology, such as for example a medium-range 433 Mhz transmission and reception. The device 11 (fig. 2) comprises a microprocessor 12 able to process and control, a transceiver 13 associated with the antenna 26, a memory 14 in which, apart from a database and function base, it is also possible to store an identification code for the user, a display 16 and a keyboard/mouse 15 to introduce data and send requests for information.

The device 11 also comprises sound emission means 28 and a connector 29 to which headphones 30 can be connected in order to listen to the desired information.

The keyboard 15 can be of any type whatsoever and comprises, in this case, four selection keys 115 and a ball-type mouse 215 which can be used, for example, to scroll pre-set lists or menus visible on the display 16. According to a variant which is not shown here, the display 16 is of the touch-screen type, and in this case there is no need for a mouse or specific keys.

Moreover, the device 11 also comprises visual recording means 31, consisting of a digital video-camera like a web cam, the function of which will be clarified later. The video-camera 31 can be a separate element from the transceiver device 11 and connected selectively thereto by means of a suitable connector 34, or integrated therein in a suitable seating 33.

The delivery unit 24 can be an autonomous operative unit, or a terminal of a network of similar terminals 24 dependent on a single central operative unit 25, containing the database which can be selectively associated with each of said delivery units 24.

Every delivery unit 24 depends on a specific geographical area 27 able to be univocally associated with the position of the user as localized by means of the GPS device 18.

Every delivery unit 24 (fig. 4) comprises a transceiver unit 21 which communicates with a database 22 controlled by a microprocessor 23. After having received the request for activation from the user, the microprocessor 23 can send, by means of an interface 19, a request for information to the central operative unit 25 which selects the specific database associated with that delivery unit 24 and makes it available for forwarding information to the user.

When using the apparatus 10, the user generates, by means of one of the activation keys 115, a request for information which automatically activates the delivery unit 24 covering the geographical zone 27 where the user is. Then, by means of the keys 115 and the ball mouse 215, the user selects a desired topic, for example concerning the nature, landscape, geology, history or the flora and/or fauna of the place, and forwards the specific request for information to the delivery unit 24.

By means of the digital video-camera 31, the user can also record a specific object or image which he wants information about, for example a flower, a tree, a view, a nature trail, or similar. The video-camera 31 is associated with the microprocessor 12, which obtains the information relating to the image recorded and automatically starts the procedure to request information by means of the transceiver 13 and the antenna 26.

The delivery unit 24 is then activated and transmits, in written and/or audio form, the relative information which can be displayed, as shown in fig. 3, on the display 16 together with the image recorded by the video-camera 31.

According to another solution offered by the apparatus 10 according to the invention, by means of the keys 115 and/or the mouse 215, the user can input personal data relating to his physical characteristics, his state of health, his athletic condition and so on, and can request the delivery unit 24 associated with the geographical zone 27 where he is for information concerning possible gymnastic-athletic activities which can be performed in specially equipped routes in that zone.

According to another embodiment, after having received and processed the user's personal data, the delivery unit 24 can also send information relating to a particular diet to follow, together with a possible indication of premises specialized in and equipped for the particular requirements of the user.

In another embodiment, at least one of the keys 115 is programmed to automatically send an emergency signal to a surveillance center or emergency center associated with the specific geographical zone 27 where the user is.

By means of the apparatus 10 according to the invention, in correspondence with any geographical zone 27, a user provided with the transceiver device 11 can request, by activating the keyboard 16, a series of information relating in particular to environmental items concerning that geographical zone 27. According to a variant, he can also request a weather forecast and consequent advice on how to behave.

According to another variant, the memory 14 is suitable to store the specific route followed by a user and desired information relating thereto, such as the length, time, difference in altitude, historical, scientific, cultural notes, etc.; on request from the user, this information can be downloaded so as to make a travel diary reporting the significant data of the trip and the route followed.

It is clear, however, that modifications and/or additions can be made to the apparatus 10 as described heretofore, without departing from the field and scope of the present invention.

## Claims

1. Apparatus to supply and exchange information between a user and at least an information delivery unit (24), comprising first transceiver means (11) able to be associated with each user to allow to send a request for information, **characterized in that** said first transceiver means (11) are associated with means (18) to localize and identify a defined geographical position of said user, and **in that** said apparatus (10) comprises a plurality of information delivery units (24) each associated with a defined geographical area (27), one of said delivery units (24) being able to be selectively activated upon reception of a request for information from a user, whose position has been associated with the specific geographical area (27) wherein said delivery unit (24) is located, said means to localize and identify the position comprise at least a GPS device (18) associated with at least an orientation device, such as a compass.

2. Apparatus as in any claim hereinbefore, **characterized in that** said transceiver means comprise a portable telecommunications device (11).

3. Apparatus as in claim 2, **characterized in that** said portable telecommunications device (11) is of the palmtop type.

4. Apparatus as in claim 2, **characterized in that** said portable telecommunications device (11) is of the e-book type.

5. Apparatus as in any claim from 2 to 4 inclusive, **characterized in that** said portable telecommunications device (11) includes interface means comprising at least display means (16) to display information in written and/or graphic form, audio emission means (28) to allow the user to listen to said information and data input means (15, 115, 215), for example a keyboard, a mouse, a touch-screen type display or similar, to allow the user to input personal data, specific requests or to send an emergency signal.

6. Apparatus as in any claim hereinbefore, **characterized in that** said first transceiver means (11) can be connected to visual recording means (31) associated with microprocessor means (12), said microprocessor means (12) being able to obtain information in digital form from the images observed by said visual recording means (31) and to transmit, to the delivery unit (24) associated with the geographical zone (27) where the user is, a request for information relating to said images.

7. Apparatus as in any claim hereinbefore, **characterized in that** each of said delivery units (24) is an autonomous operative unit.

8. Apparatus as in any claim from 1 to 6 inclusive, **characterized in that** each of said delivery units (24) is a terminal of a network of terminals connected to a central operative unit (25).

9. Apparatus as in any claim hereinbefore, **characterized in that** it comprises memory means to store a route followed by a user and to supply, on request from said user, information relating to said route, such as length, times, differences in altitude, historical, scientific, cultural notes etc.

10. Apparatus as in any claim hereinbefore, **characterized in that** said delivery units (24) are suitable to supply meteorological information relating to the specific geographical zone of interest to the user and to supply relative advice on how to behave.
